# DEMANDE DE BREVET EUROPEEN

(11) **EP 3 809 346 A1**
(43) Date de publication de la demande: **21.04.2021**
(21) Numéro de dépôt: 20020302.4
(22) Date de dépôt: 27.06.2020
(51) Int. Cl.: G06Q 10/06, H04L 29/08

(54) **SYSTÈME ET DISPOSITIF D'ORGANISATION DU TOURISME MEDICAL BASE SUR UNE CHAINE DESBLOCS**

(30) Priorité: 17.10.2019 MC 2687
(71) Demandeur: S.A.R.L. Clinimont, 98000 Monaco (MC)
(72) Inventeur: Idiz, Idil, 98000 Monaco (MC); Idiz, Gizem Ayla, 98000 Monaco (MC)

(57) **Abrégé**

La présente invention concerne un système et dispositif d'organisation du tourisme médical intelligents pour réaliser une collaboration entre de multiples organisations comprend l'unité d'éntrée -sortie des données, un module de qualité quantitative des données, un module de moteur de règles, un module de soutien à la décision et un module de stockage des données. L'invention permet la transmission des bases des données liés au tourisme médical entre les secteurs.Ce système assure la gestion et le classement des niveaux des donnés entre les secteurs. Il permet de faciliter la communication entre des différents secteurs liés au séjour médical. Pour faire la collaboration entre les différents secteurs, ce dispositif résoud des nombreuses complexités juridiques dans la fourniture de services internationaux à l'aide de module de moteur de règles. Il contrôle et marque les événements. Ce module fournit une détection instantanée à des situations nécessitant une supervision. Il utilise une chaîne de blocs pour sécuriser et mémoriser des informations d'utilisateur. Pour la gestion du séjour médical le module de système de détection et d'analyse effectue une analyse de regresssion avec la code R. Ce dispositif anaylse le rapport des indicateurs de prix, de conditions, de destionations demandé par l'utilisateur pour réaliser une collaboration entre multiple organisations lié au séjour médical.

## Description

### Technique Antérieure :

L'invention antérieure mentionné sous le No 2018/06021 en Turquie concerne la transmission des données de santé basé chaîne de blocs. Il permet de stocker les données de santé de maniere chronologique.

### La Nouvelle Technique Apporté:

L'invention système et dispositif d'organisation du tourisme médical basés sur une chaîne des blocs apporte ces nouvelles techniques :
Le module de qualité quantitative des données distingue et classe des données des niveaux des utilisateurs situées dans le système.

Le module de moteur de règles donne un sens à la probabilité de la réalisation de l'organisation des services selectionnés en testant les données selon les procédures de commande prédéterminés. Pour faire la collaboration entre les différents secteurs, ce dispositif résoud des nombreuses complexités juridiques dans la fourniture de services internationaux à l'aide de module de moteur de règles.

Le sous module de système de détection et d'analyse détecte les déviations en corrélant, traitant et effectuant des calculs statistiques.

Pour la gestion du séjour médical le module de système de détection et d'analyse effectue une analyse de regresssion avec la code R. Ce dispositif anaylse le rapport des indicateurs de prix, de conditions, de destionations demandé par l'utilisateur pour réaliser une collaboration entre multiple organisations lié au séjour médical. Dans ce module, le Code R peut calculer différents résultats en fonction des modifications apportées au jeu de données et peut visualiser le résultat. Le sous module de système de gestion assure la plannification de multiples organisations, la détermination des prix et des couts, la gestion des ordres de services entre différents secteurs.

Le sous module de système d'inspection contrôle et marque une détection instantanée à des situations nécessitant une supervision.

### La Technique :

La présente invention concerne un système et dispositif d'organisation du tourisme médical intelligents pour réaliser une collaboration entre de multiples organisations comprend l'unité d'éntrée -sortie des données, un module de qualité quantitative des données, un module de moteur de règles, un module de soutien à la décision et un module de stockage des données.

L'unité d'éntrée -sortie des données permet de transmettre et de recevoir big data depuis IOT. Le module de qualité quantitative des données distingue et classe des données des niveaux des utilisateurs situées dans le système. Le module de moteur de règles donne un sens à la probabilité de la réalisation de l'organisation des services selectionnés en testant les données selon les procédures de commande prédéterminés. Le module de soutien à la décision se compose de trois sous-modules: un sous module de système de détection et d'analyse, un sous module de système de gestion et un sous module de système d'inspection. Le sous module de système de détection et d'analyse détecte les déviations en corrélant, traitant et effectuant des calculs statistiques. Le sous module de système de gestion assure la plannification de multiples organisations, la détermination des prix et des couts, la transmission des données et la gestion des ordres de services entre différents secteurs. Le sous module de système d'inspection contrôle et marque une détection instantanée à des situations nécessitant une supervision. Le module de stockage des données se compose de la chaîne de blocs et contrats intelligents. Les contrats intelligents se composent de lignes de commande définis différement pour chaque secteur et sont stockés sous forme de chaîne de blocs. Avec la chaîne de blocs, les données personnelles sont rendues accesibles aux fournisseurs autorisées par l'utilisateur.

Ce système assure la gestion et le classement des niveaux des donnés entre les secteurs. Il permet de faciliter la communication entre des différents secteurs liés au séjour médical. Pour faire la collaboration entre les différents secteurs, ce dispositif résoud des nombreuses complexités juridiques dans la fourniture de services internationaux à l'aide de module de moteur de règles. Il contrôle et marque les évènements. Ce module fournit une détection instantanée à des situations nécessitant une supervision. Il utilise une chaîne de blocs pour sécuriser et mémoriser des informations d'utilisateur. Pour la gestion du séjour médical le module de système de détection et d'analyse effectue une analyse de regresssion avec la code R. Ce dispositif anaylse le rapport des indicateurs de prix, de conditions, de destionations demandé par l'utilisateur pour réaliser une collaboration entre multiple organisations lié au séjour médical.

Le tourisme médical est un type de tourisme particulier qui combine les services touristiques et les services de santé sous un même groupe. Il comprend divers tourismes: médical, thermal, handicap, gériatrie et urgence. Afin de profiter des opportunités de santé et de tourisme en même temps, le tourisme médical contient un diagnostic, un deuxième avis médical, un traitement etc. toutes sortes de services médicaux aux personnes pendant leur voyage. Les personnes et leurs accompagnants voyagent hors frontières afin de bénéficier d'un service médical à meilleur coût, à meilleur qualité, économique et rapide etc.

Le système est basé sur un chaîne des blocs hybride afin de réaliser une collaboration entre multiples organisations destinés au séjour médical. Le mode de fonctionnement du système selon l'invention est le suivant: L'apprentissage automatique est fourni par l'intelligence artificielle (IA). Les données qui se trouvent dans des jeux de données sont interprétées grâce aux algorithmes d'apprentissage automatique. Ces données sont liées les unes aux autres. La sécurité des données est assurée par un chaîne des blocs hybride.

Le système permet aux pays de valoriser leur marque dans le secteur du tourisme médical. Ce système élimine de nombreuses complexités juridiques dans la fourniture de services du tourisme médical. Il permet de détecter d'éventuelles fraudes et d'éviter l'exclusion des parties. L'invention basée chaîne des blocs hybride offre un espace de partage de données et de recherches collaboratives plus transparent et plus efficient, le tout dans le respect de la vie privée. La sécurité des données constitue un enjeu majeur pour le secteur de la santé. Les données personnelles des patients, en particulier l'ensemble du dossier médical du patient sont des données sensibles. Il est garanti que les données sont transférées de manière sécurisée aux services concernés entre les parties.

L' utilisateur peut gérer son séjour médical tout seul a la limite juste en appuyant sur un bouton; il bénéficie de tous les services en gardant la sécurité des données. Le but de ce système est de conclure avec la méthode d'automatisation de l'organisation du tourisme médical le plus vite possible avec moins de main d'oeuvre. Avec ce système le potentiel touristique, qui n'existe qu'à certaines périodes de l'année, peut être étendu à douze mois, ce qui accroît l'afflux de devises dans le pays et crée de nouvelles possibilités d'emploi.

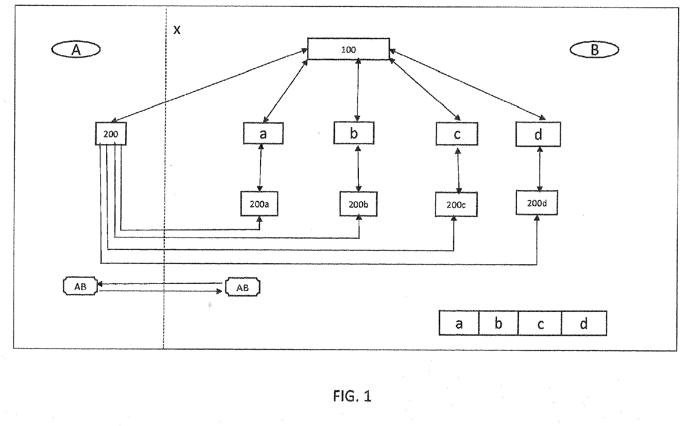

La figure 1 concerne les individus, les institutions privées et les institutions publiques qui ont des parts dans l'organisation du séjour médical. Selon la figure 1, l'utilisateur (200) mentionné peut etre un établissement public, un établissement privé, un patient, le tuteur légal d'un patient, un compagnon, un prestataire de services de santé, une agence de voyage, une compagnie d'assurance, une compagnie de transport, une pharmacie, une compagnie intermédiaire, une banque, une entreprise comptable, une compagnie d'organisation intérmediaire, une communauté, un centres commercial, un restaurant, une agence de traduction, une fondation, une société pharmaceutique, une Organisation Non Gouvernementale etc. Il existe de nombreuses parties couvrant le secteur public et le secteur privé.

L'invention est appliquable aux différents secteurs liés au tourisme médical. Béneficiant de la théorie de Grappe Industrielle, l'invention constitue une Grappe de Tourisme Médical. Ce classement permet la collaboration des différents secteurs du tourisme médical. L'invention permet la transmission des bases des donnés liées au tourisme médical entre les secteurs. Tous les acteurs de la chaîne des blocs du tourisme médical pourraient vérifier la provenance et l'intégrité de leur donnés. L'invention permet de stocker les preuves d'existence de documents et de vérifier l'authenticité de l'organisation.

Le système (100) couvre le déplacement entre les frontières (x) de l'utilisateur (200) d'un pays A à un pays B et a pour but d'utiliser plusieurs services liés au séjour médical. L'utilisateur peut faire une demande d'organisation de tourisme médical personnalisé ou en groupe. L'utilisateur peut choisir différents secteurs dans le cadre de la demande de service. Le système divise en segments les données sous forme de dossiers de santé (a), de voyage (b), d'assurance (c), d'organisation (d) appartenant à différents secteurs pour pouvoir être transmis instantanément aux services concernés. Ainsi, l'organisation et le paiement sont instantanés. Il peut exister entre les pays contractants des traités et accords bilatéraux dans le domaine de la santé (AB) entre le pays A et le pays B pour améliorer la coopération existante. L'établissement de santé (200a) situé au pays B peut avoir accès au dossier de santé (a) de l'utilisateur (200) résidant dans le pays A. L'établissement de santé (200a) situé dans le pays B peut fournir un engagement de service gratuit ou payant à l'utilisateur (200) résidant dans le pays A.

L'établissement de voyage (200b) situé au pays B peut avoir accès au dossier de voyage (b) de l'utilisateur (200) résidant dans le pays A. L'établissement d'assurance (200c) situé au pays B peut avoir accès au dossier d'assurance (c) de l'utilisateur (200) résidant dans le pays A. L'établissement d'organisation (200d) situé au pays B peut avoir accès au dossier d'organisation (d) de l'utilisateur (200) résidant dans le pays A.

Dans une configuration possible, l'invention permet l'utilisation technologique de la télémédecine. Cela implique un fournisseur de soins de santé utilisant la technologie des télécommunications pour fournir des soins de santé à un patient. Cela peut inclure une visite vidéo à distance avec un patient, le partage des informations médicales et du dossier de santé d'un patient avec un autre fournisseur de soins de santé pour un deuxième avis, ou même la réalisation d'une chirurgie robotique à partir d'un autre endroit.

Le système comprend un réseau informatique distribué constitué de plusieurs nœuds. Les données de l'utilisateur se décomposent entre les différents secteurs constitués dans un noeud. Chaque nœud comprend au moins un dispositif d'organisation du tourisme médical (2). Tandis que chacun des nœuds peut être géré par une seule personne et un établissement ou bien chacun de ces nœuds peut être géré par des différentes personnes et établissements. Le système a pour but de réaliser l'organisation du tourisme médical et son règlement.

Le dispositif d'organisation du tourisme médical (2) concerne une combinaison de l'un ou de plusieurs dispositifs de traitement éléctronique ayant la capacité de traitement de l'information. Le dispositif d'organisation du tourisme médical (2) peut être un ordinateur de bureau, un ordinateur portable, une tablette, un smartphone, un serveur etc. Le module de stockage des données (6) situé dans le dispositif d'organisation du tourisme médical (2) conserve les données des utilisateurs sous forme de chaînes de blocs (10). Les chaînes de blocs (10) contiennent les entrées des données dans l'ordre chronologique.

Le client/serveur est fourni par les utilisateurs (200) pour accéder au système distribué. Le client/serveur peut être un téléphone mobile, un ordinateur etc. Le système comprend un appareil IoT (Internet of Things) qui reçoit les données instantanées des utilisateurs et les envoie à un nœud pour ajouter dans la chaîne de blocs.

L'appareil IoT envoie les données de l'utilisateur au dispositif d'organisation du tourisme médical (2). IoT permet l'installation de divers capteurs de données automatiques et les envoyer sur la chaîne de blocs via un contrat intelligent. Ce système et le contrat intelligent opérant la standardisation soient reliés grâce à une API (Application Programming Interface). Une API peut faire le lien entre la chaîne de blocs et les systèmes préexistants où sont stockés les dossiers médicaux complets. Les objets connectés serviraient de capteurs connectés à la chaîne de blocs, et un contrat intelligent opérerait automatiquement les transactions vers la chaîne de blocs. Ce système présenterait deux avantages : d'une part, la collecte de différentes données se ferait automatiquement ; d'autre part, la collecte par IoT permettrait de mettre à jour quasiment en temps réel les bases de données.

Le dispositif d'organisation du tourisme médical (2) permet de mettre à jour la chaîne de blocs (10) de l'utilisateur (200). L'appareil IoT peut se connecter à un réseau. Il convertit ses mesures en données numériques. L'appareil IoT peut être un appareil pour le secteur médical ou autre. Un appareil IoT reçoit les données instantanés des utilisateurs (200) et les envoie à un nœud pour ajouter dans la chaîne de blocs existante. Dans une configuration possible de l'invention, les appareils IoT peuvent être des appareils électroniques portables comme un bracelet intelligent. Le système peut être intégré au service cloud.

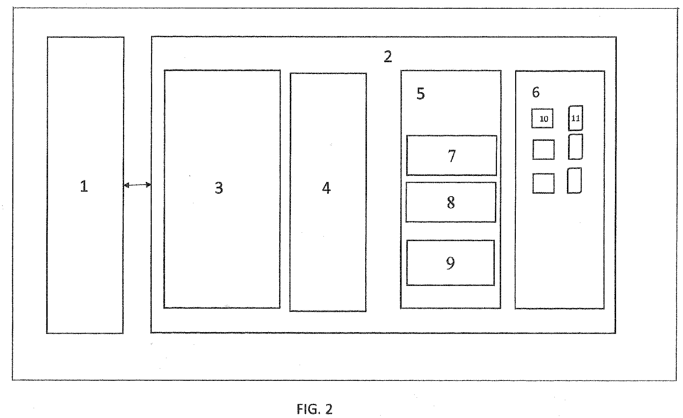

Selon le figure 2, le dispositif d'organisation du tourisme médical (2) élaboré se compose en quatre modules principaux: un module de qualité quantitative des données (3), un module de moteur de règles (4), un module de soutien à la décision (5) et un module de stockage des données (6). L'unité d'entrée-sortie des données (1) fournit une commande d' entrée et de sortie des données au dispositif d'organisation du tourisme médical (2). Tandis que l'unité d'entrée-sortie de données (1) peut synchroniser avec des périphériques tels qu'un clavier, moniteur, une souris; l'unité d'entrée-sortie de données (1) peut communiquer avec le client/serveur ou l'appareil IoT à l'intérmediaire d'un API. L'unité d'entrée-sortie de données (1) permet de transmettre et de recevoir les données depuis IOT.

Le module de qualité quantitative des données (3) est un mécanisme permettant aux unités ou département concernés de distinguer les informations qui seront utiles à l'unité en fonction de ses besoins en les évaluant à l'aide de procédure de commandes. Ce module distingue et classe les données des niveaux des utilisateurs situées dans le systeme.

Chaque pays a un système juridique différent. Le secteur de la santé est très réglementé, notamment s'agissant des données médicales; qui-plus-est, les réglementations varient selon les pays, ce qui complique la donne pour la mise en place d'applications. Cela crée de nombreuses complexités juridiques dans la fourniture de services internationaux de tourisme médical. Le module de moteur de règles (4) contient la législation internationale, nationale, sanitaire et touristique etc. Ce module donne un sens a la probabilité de la réalisation de l'organisation des services selectionnés en testant les données selon les procédure de commande prédétérminée. Le module de soutien à la decision (5) se compose de trois sous-modules: un sous-module de système de détection et d'analyse (7), un sous-module de système de gestion (8) et un sous-module de système d'inspection (9). Le sous-module de système de détection et d'analyse (7) effectue une analyse de régression. Ce module interpréte des données qui se trouvent dans les jeux de données de manière continue et instantanée au moyen d'algorithmes d'apprentissage automatique fournis par l'intelligence artificielle (IA). Pour réaliser une collaboration entre de multiples organisations liées au séjour médical, ce module analyse le rapport des indicateurs de prix, de conditions, de destinations demandés par l'utilisateur.

Il permet de détecter les déviations en corrélant, traitant et effectuant des calculs statistiques. Dans ce module, le Code R peut calculer différents résultats en fonction des modifications apportées au jeu de données et peut visualiser le résultat. Avec le code R, les données peuvent être collectées en temps réel, une analyse statistique et prédictive peut être effectuée, des visualisations peuvent être créés et transmettre les résultats aux differentes parties liées au tourisme médical. La chaîne de blocs est utilisée dans le module de stockage pour un stockage fiable des données calculées. Ce module comprend l'Electronic Data Interchange (EDI) pour organiser du tourisme médical avec la méthode d'automatisation. Ce role de EDI est la transmission et la réception de documents entre les parties.

Les organisations de santé pourraient, elles, démultiplier leurs possibilités d'analyse statistique et de contenu pour leurs recherches, mais aussi offrir au personnel soignant une meilleure connaissance du patient pour des meilleurs diagnostics et des meilleurs soins. La blockchain pourrait alors à la fois servir de grande base de données pour des analyses big data, des meilleurs suivis de patient et donc de meilleurs soins, mais aussi servir de place de marché de données médicales des patients, et le tout de manière entièrement décentralisée, sécurisée et respectueuse de la vie privée des patients.

Le sous-module du système de gestion (8) permet d'assurer la plannification de multiples-organisations, la détermination des prix et des coûts, la transmission des données et la gestion des ordres de services entre différents secteurs. Ce module permet de faciliter la communication entre des différents secteurs liés au séjour médical. Ce module est conçu pour répondre aux demandes de l'utilisateur. Ce module gére la gestion des rô*l*es et les niveaux des utilisateurs (200) situés dans le système.

Le sous module de système d'inspection (9), contrôle et marque les évènements. Ce module envoie les événements marqués à l'utilisateur. Ce module laisse les événements marqués sous le contrôle de l'utilisateur. Ce module, fournit une détection instantanée à des situations nécessitant une supervision. Ainsi, une intervention précoce est fournie. Cette unité vérifie ce qui est promis à l'utilisateur et dans quelle mesure la promesse est remplie. Les sorties du système montrent les données du rapport qui peuvent être organisées en fonction de la demande de l'utilisateur.

Le module de stockage des données (6) se compose de chaîne des blocs (10) et contrats intelligents (11). Le module de stockage des données (6) comprend également des contrats intelligents (11) définis différemment pour chaque secteur. Les contrats intelligents (11) peuvent être évoqués par le dispositif d'organisation du tourisme médical (2) sur n'importe quel nœud. Le contrat intelligent opére une vérification des demands. Si les données sont rédigées correctement qu'elles respectent les règles de standardisation, alors le contrat intelligent opère les transactions de données vers la chaîne de blocs.

Les contrats intelligents (11) se composent de lignes de commande et sont stockés sous forme de chaîne de blocs (10). Cela empêche toute modification ultérieure des données. La chaîne de blocs garantit l'anonymat des patients grâce à son système de clé publique et clé privé. Les données standardisées sont anonymes ; seul un ID utilisateur unique est visible (clé publique). Lorsqu'un utilisateur (200) souhaite mettre à jour une donnée, il peut faire une demande à l'aide de sa clé. En cas d'urgence , l'accès au dossier médical est débloqué avec l'accord de plusieurs personnes de confiance comme le médecin traitant ou un membre de la famille. Avec la chaîne de blocs, toutes les données personnelles sont rendues accessibles aux fournisseurs autorisés par l'utilisateur (200). Lorsqu'un second utilisateur veut accèder à des données qui se trouvent dans une premiére chaîne de blocs d'un premier utilisateur, le second utilisateur demande l'accès aux dossiers du premiére utilisateur. Le premier contrat intelligent interroger sur une requête d'accès à la premiere chaîne de blocs du second utilisateur, autorisant ou interdisant l'accès à la première chaîne de blocs en fonction du résultat de la requête. Dans une configuration possible, un premier contrat intelligent peut interroger les conditions auxquelles un second utilisateur doit avoir accès. Ces conditions peuvent être le transfert d'argent sur un second utilisateur, le transfert de services ou produits du première utilisateur etc. Si l'accès est approuvé, le transfert d'argent sur un second utilisateur, le transfert de services ou produits du premièr utilisateur peut etre confirmé par un premier contrat intelligent.

Par exemple, le second utilisateur peut être un établissement de santé (200a) et le premier utilisateur peut être un patient (200). L'etablisement de santé (200a) demande l'accès aux dossiers médicaux (a) du patient (200) protégés de manière cryptographique avec un algorithme Hash, et si le contrat intelligent le confirme, il peut s'engager auprès du patient (200) à fournir des services payants ou gratuits. Par exemple, dans le cas d'un troisème utilisateur ce peut être un établissement de voyage (200b), la demande d'accès du patient (200) aux dossiers médicaux (a) sera rejetée par le contrat intelligent. Les données entrées dans le système avant le voyage médical de l'utilisateur ne peuvent être consultées que par l'établissement de santé qu'il autorise, mais seules les dossiers de voyage (b) peuvent être transmises à l'établissement de voyage (200b) par le biais du contrat intelligent.

Dans une configuration possible, lorsqu'une demande est acceptée par le contrat intelligent, un message peut être envoyé aux utilisateurs concernés. Ces messages peuvent être envoyés aux Client/serveur prédéterminés des utilisateurs par courrier électronique, message texte, etc. Ainsi, dans le cadre du droit international, la personne peut effectuer une organisation du tourisme médical personnalisée, rapide, instantanée et sécurisée, dans le respect de la confidentialité des données.

Dans une configuration possible l'invention peut être utilisée en cas d'épidémie mondiale. Les pays peuvent accèder aux données médicales instantanées des personnes afin de leur donner une permition des formalités d'entrée et de sortie d'un territoire étranger. En cas de détection de la maladie, les états n'autorisent pas l'entrée de l'individu sur son territoire.

Dans une configuration possible de l'invention, il existe une commande vocale et un mécanisme de réponse vocale. Les sources de données sont entrées via une technique discours/texte et texte/discours. Dans l'invention, tous les modules et composants se complètent. Ce système continue de fonctionner sans module. Cependant, tous les modules doivent travailler ensemble pour une organisation saine et continue.

## Revendications

1. La présente invention concerne un système et dispositif d'organisation du tourisme médical intelligents pour réaliser une collaboration entre de multiples organisations comprend l'unité d'éntrée -sortie des données, un module de qualité quantitative des données, un module de moteur de règles, un module de soutien à la décision et un module de stockage des données. L'invention appelé un "Système et dispositif d'organisation du médical tourisme basés sur une chaîne des blocs" Les caractéristiques de l'invention sont les suivant:
Le mode de fonctionnement du système selon l'invention est le suivant: L'apprentissage automatique est fourni par l'intelligence artificielle (IA). Les données qui se trouvent dans des jeux de données sont interprétées grâce aux algorithmes d'apprentissage automatique. Ces données sont liées les unes aux autres. La sécurité des données est assurée par blockhain hybride.
- Le système comprend un réseau informatique distribué constitué de plusieurs nœuds. Les données de l'utilisateur se décomposent entre les différents secteurs constitués dans un noeud. Chaque nœud comprend au moins un dispositif d'organisation du tourisme médical (2). Tandis que chacun des nœuds peut être géré par une seule personne et un établissement ou bien chacun de ces nœuds peut être géré par des différentes personnes et établissements. Le système a pour but de réaliser l'organisation du tourisme médical et son règlement.

2. Cette révendication est compatible avec révendication 1. Le dispositif d'organisation du tourisme médical (2) se constitue des éléments ci-dessous:
- L'unité d'entrée-sortie des données (1) fournit une commande d' entrée et de sortie des données au dispositif d'organisation du tourisme médical (2). Tandis que l'unité d'entrée-sortie de données (1) peut synchroniser avec des périphériques tels qu'un clavier, moniteur, une souris; l'unité d' entrée-sortie de données (1) peut communiquer avec le client/serveur ou l'appareil IoT à l'intérmediaire d'un API. L'unité d'entrée-sortie de données (1) permet de transmettre et de recevoir les données depuis IOT.
- Le module de qualité quantitative des données (3) est un mécanisme permettant aux unités ou département concernés de distinguer les informations qui seront utiles à l'unité en fonction de ses besoins en les évaluant à l'aide de procédure de commandes. Ce module distingue et classe les données des niveaux des utilisateurs (200) situées dans le systeme.
- Le module de moteur de règles (4) contient la législation internationale, nationale, sanitaire et touristique etc. Ce module donne un sens a la probabilité de la réalisation de l'organisation des services selectionnés en testant les données selon les procédure de commande prédétérminée.
- Le module de soutien à la decision (5) se compose de trois sous-modules: un sous-module de système de détection et d'analyse (7), un sous-module de système de gestion (8) et un sous-module de système d'inspection (9).
- Ce module interpréte des données qui se trouvent dans les jeux de données de manière continue et instantanée au moyen d'algorithmes d'apprentissage automatique fournis par l'intelligence artificielle (IA). Pour réaliser une collaboration entre de multiples organisations liées au séjour médical , ce module analyse le rapport des indicateurs de prix, de conditions, de destinations demandés par l'utilisateur.
Il permet de détecter les déviations en corrélant, traitant et effectuant des calculs statistiques. Dans ce module, le Code R peut calculer différents résultats en fonction des modifications apportées au jeu de données et peut visualiser le résultat. Avec le code R, les données peuvent être collectées en temps réel, une analyse statistique et prédictive peut être effectuée, des visualisations peuvent être créés et transmettre les résultats aux differentes parties liées au tourisme médical. La chaîne de blocs est utilisée dans le module de stockage pour un stockage fiable des données calculées. Ce module comprend l'Electronic Data Interchange (EDI) pour organiser du tourisme médical avec la méthode d'automatisation. Ce role de EDI est la transmission et la réception de documents entre les parties.
- Le sous-module du système de gestion (8) permet d'assurer la plannification de multiples-organisations, la détermination des prix et des coûts, la transmission des données et la gestion des ordres de services entre différents secteurs. Ce module permet de faciliter la communication entre des différents secteurs liés au séjour médical. Ce module est conçu pour répondre aux demandes de l'utilisateur. Ce module gére la gestion des rô*l*es et les niveaux des utilisateurs (200) situés dans le système.
- Le sous module de système d'inspection (9), contrôle et marque les évènements. Ce module envoie les événements marqués à l'utilisateur. Ce module laisse les événements marqués sous le contrôle de l'utilisateur. Ce module, fournit une détection instantanée à des situations nécessitant une supervision.
- Le module de stockage des données (6) se compose de chaîne des blocs (10) et contrats intelligents (11).
- Les chaîne des blocs (10) contiennent les entrées des données dans l'ordre chronologique.
- Les contrats intelligents (11) définis différemment pour chaque secteur.
- Les sorties du système développé montrent les données du rapport qui peuvent être organisées en fonction de la demande de l'utilisateur (200).

3. Cette révendication est compatible avec révendications 1 et 2 ci-dessus. La specifité est d'avoir le mécanisme de commande vocale et mécanisme de réponse vocale.

4. Cette révendication est compatible avec révendications 1, 2 et 3 ci-dessus. Les sources de données sont entrées via une technique discours/texte.

5. Cette révendication est compatible avec révendications 1, 2, 3 et 4 ci-dessus. Les sources de données sont entrées via une technique texte/discours.

6. Cette révendication est compatible avec révendications 1, 2, 3, 4 et 5 ci-dessus. Le système peut être intégré au service cloud.

7. Cette revendication est compatible avec révendications 1, 2, 3, 4, 5 et 6 ci-dessus. Le système comprend un appareil IoT (Internet of Things) qui reçoit les données instantanées des utilisateurs et les envoie à un nœud pour ajouter dans la chaîne de blocs. L'appareil IoT envoie les données de l'utilisateur au dispositif d'organisation du médical tourisme (2). IoT permet l'installation de divers capteurs de données automatiques et les envoyer sur la chaîne de blocs via un contrat intelligent. Ce système et le contrat intelligent opérant la standardisation soient reliés grâce à une API (Application Programming Interface).
DESCRIPTION DE FIGURES
Figure 1. Vue représentative de l'invention
Figure 2.Vue schématique de l'invention
